(19) Europäisches Patentamt
European Patent Office
Office européen des brevets

(11) **EP 3 671 574 B1**

(12) **EUROPEAN PATENT SPECIFICATION**

(45) Date of publication and mention
of the grant of the patent:
**10.07.2024  Bulletin 2024/28**

(21) Application number: **18213925.3**

(22) Date of filing: **19.12.2018**

(51) International Patent Classification (IPC):
**G06N 3/094** *(2023.01)*      **G06N 3/09** *(2023.01)*
**G06N 3/084** *(2023.01)*

(52) Cooperative Patent Classification (CPC):
**G06N 3/084; G06N 3/09; G06N 3/094;**
**G06V 10/774; G06V 10/776; G06V 10/82;**
G06F 18/24143

(54) **DEVICE AND METHOD TO IMPROVE THE ROBUSTNESS AGAINST ADVERSARIAL EXAMPLES**

VORRICHTUNG UND VERFAHREN ZUR VERBESSERUNG DER ROBUSTHEIT GEGENÜBER
KONTRADIKTORISCHEN BEISPIELEN

DISPOSITIF ET PROCÉDÉ POUR AMÉLIORER LA ROBUSTESSE FACE À DES EXEMPLES
CONTRADICTOIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.06.2020  Bulletin 2020/26**

(73) Proprietors:
• **Robert Bosch GmbH**
  **70442 Stuttgart (DE)**
• **Carnegie Mellon University**
  **Pittsburgh, PA 1521 (US)**

(72) Inventors:
• **Kolter, Zico**
  **Pittsburgh, PH, PA Pennsylvania 15222 (US)**
• **Schmidt, Frank**
  **70439 Stuttgart (DE)**
• **Wong, Eric**
  **Lexington, MA, MA Massachusetts 02420 (US)**

(74) Representative: **Bee, Joachim**
  **Robert Bosch GmbH**
  **C/IPE**
  **Wernerstrasse 51**
  **70469 Stuttgart (DE)**

(56) References cited:
• **A. C. SERBAN, E. POLL: "Adversarial examples
  - a complete characterisation of the
  phenomenon", ARXIV.ORG, CORNELL
  UNIVERSITY LIBRARY, 201 OLIN LIBRARY
  CORNELL UNIVERSITY ITHACA, NY 14853, 2
  October 2018 (2018-10-02), XP080929044**
• **M. SHARIF ET AL: "On the suitability of Lp-norms
  for creating and preventing adversarial
  examples", ARXIV.ORG, CORNELL UNIVERSITY
  LIBRARY, 201 OLIN LIBRARY CORNELL
  UNIVERSITY ITHACA, NY 14853, 27 July 2018
  (2018-07-27), XP081107122**
• **A. SINHA ET AL: "Certifying some distributional
  robustness with principled adversarial training",
  ARXIV.ORG, CORNELL UNIVERSITY LIBRARY,
  201 OLIN LIBRARY CORNELL UNIVERSITY
  ITHACA, NY 14853, 1 May 2018 (2018-05-01),
  XP081307783**
• **A. GENEVAY ET AL: "Learning generative
  models with Sinkhorn divergences",
  ARXIV:1706.00292V3, 20 October 2017
  (2017-10-20), XP055616563, Retrieved from the
  Internet
  <URL:https://arxiv.org/abs/1706.00292v3>
  [retrieved on 20190619]**

## Description

The invention concerns a method for assessing robustness of an image classifier according to claim 1, a method for training an image classifier according to claim 8, a computer program according to claim 11, a machine-readable storage medium according to claim 12, and a system according to claim 13

Prior art

US10007866 BB discloses a method comprising: accessing, from a memory, a neural network image classifier, the neural network image classifier having been trained using a plurality of training images from an input space, the training images being labeled for a plurality of classes;

computing a plurality of adversarial images by, for each adversarial image, searching a region in the input space around one of the training images, the region being one in which the neural network is linear, to find an image which is incorrectly classified into the plurality of classes by the neural network; applying the training image to the neural network and observing a response of the neural network;
computing a constraint system which represents the input space using the observed response; and
further training the neural network image classifier to have improved accuracy using at least the adversarial images.

"Universal Adversarial Perturbations Against Semantic Image Segmentation", arXiv preprint arXiv:1704.05712v3, Jan Hendrik Metzen, Mummadi Chaithanya Kumar, Thomas Brox, Volker Fischer, disclose a method for generating adversarial perturbations.
A. C. Serban, E. Poll, "Adversarial examples - a complete characterisation of the phenomenon", ARXIV.ORG, CORNELL UNIVERSITY LIBRARY, 201 OLIN LIBRARY CORNELL UNIVERSITY ITHACA, NY 14853 provides an overview on how to generate and use adversarial examples.

Advantages of the invention

Classifiers, like e.g. neural network classification systems can easily be fooled. It is well known that classifiers which may be based on deep learning may be sensitive to small perturbations. In order to deploy such systems in the physical world it is important to provide a proof about the system's robustness.
It is possible to compute robust classifiers with respect to adversarial noise that lies within a small $L_p$ ball. Nonetheless, adversarials with respect to more natural perturbations are not necessarily covered by these robustness statements. More natural perturbations include partial translations, rotations and motion blur. Moving for example a dark object by one pixel will lead to a very large $L_\infty$-distance if the background is very bright, but will usually be considered as a small change in the physical world. As a consequence, these small physical changes are not covered by $L_\infty$-robustness.
The methods of the claim set have the advantage to improve robustness with respect to such perturbations.

Disclosure of the invention

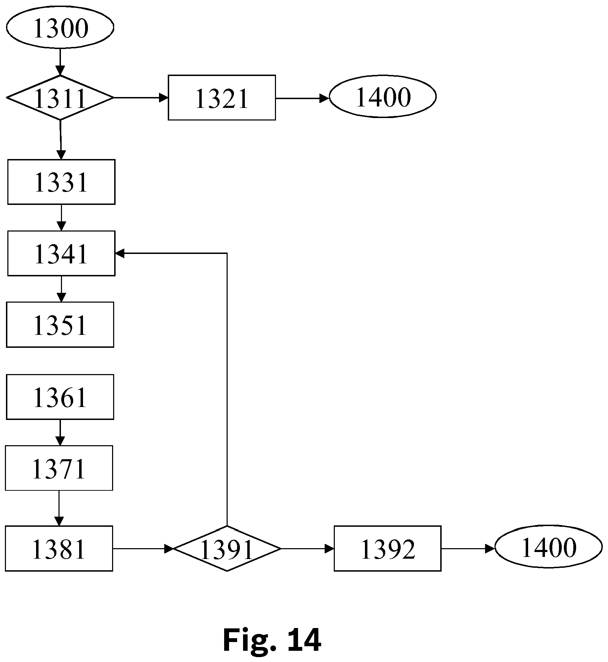

A first embodiment according to the invention is defined by claim 1.
The at least approximate Wasserstein distance is a Sinkhorn distance which differs from a Wasserstein distance by an entropic term, wherein for any pair of first distribution (P) and second distribution (Q), said entropic term characterizes an entropy of a distribution $\Pi$ that satisfies $\Pi\mathbf{1}_n = P$, $\Pi^T \mathbf{1}_n = Q$. If P and Q are distributions defined over the same domain $\Omega$, then $\Pi$ is a distribution over the domain $\Omega \times \Omega$ with P and Q as its marginals.
It has been discovered that the inclusion of said entropic term enables an approximate solution to the projection on a Wasserstein ball that is a lot faster to compute.
It should be noted that, as shown in "Sinkhorn Distances: Lightspeed Computation of Optimal Transportation Distances", arXiv preprint arXiv:1306.0895v1, Marco Cuturi (2013), a Sinkhorn distance is in fact not a metric in the mathematical sense, since it is possible to have a zero distance between two distributions that are not the same. Instead, in a mathematical sense, it is a pseudo-metric.
In fact, it has been discovered that a good way for determining the projected input signal ($x^{proj}$) by solving a convex optimization corresponding to said minimization under said constraints. This is described in detail in the description corresponding to figure 14.
In one further aspect to the invention, the adversarial input signal ($x^{adv}$) may be provided by a targeted attack, i.e. provided to cause the classifier to classify it as belonging to a predefined second class. An efficient way for doing so can be provided if said classifier when provided with said input signal (x), is configured to output a first classification

value ($f_{l_0}$) corresponding to said first class ($\ell_0$) and a second classification value ($f_l$) corresponding to said a predefined second class ($\ell$). In this sense, it may be said that said input signal (x) causes said first and/or second classification value. A robust way to generate said targeted misclassification is by determining said modified input signal ($x^{mod}$) such as to cause a difference (g) between said first classification value ($f_{l_0}$) and said second classification value ($f_l$) to be smaller than the difference (g) caused by said original input signal ($x^{org}$). Conveniently, this may be achieved by determining said modified input signal ($x^{mod}$) depending on a gradient ($\nabla g$) of said difference (g).

In alternative embodiment to said targeted attack, said adversarial input signal ($x^{adv}$) may be provided by an untargeted attack, i.e. provided to cause said classifier to classify it as belonging to any different second class. In this case, conveniently said modified input signal ($x^{mod}$) is provided such as to cause said first classification value ($f_{l_0}$) to be smaller than said first classification value ($f_{l_0}$) caused by said original input signal ($x^{org}$). Conveniently, this may be achieved by determining said modified input signal ($x^{mod}$) depending on a gradient ($\nabla f_{l_0}$) of said first classification value ($f_{l_0}$).

In a further aspect, the steps of modifying said original input signal ($x^{org}$) to yield said modified input signal ($x^{mod}$) and projecting said modified input signal ($x^{mod}$) onto said predefined subset to yield said projected input signal ($x^{proj}$) are carried out iteratively by using said projected input signal ($x^{proj}$) of a preceding iteration as original input signal ($x^{org}$) a subsequent iteration, wherein said step projecting said modified input signal ($x^{mod}$) onto said predefined subset is carried out after each step of modifying said original input signal ($x^{org}$). Such an iterative method is preferable, because it ensures that intermediate modified input signal ($x^{mod}$) remain close to a boundary of the at least approximate Wasserstein ball, thus enhancing convergence of the method.

Embodiments of the invention will be discussed with reference to the following figures in more detail. The figures show:

Figure 1      a control system having a classifier controlling an actuator in its environment;

Figure 2      the control system controlling an at least partially autonomous robot;

Figure 3      the control system controlling a manufacturing machine;

Figure 4      the control system controlling an automated personal assistant;

Figure 5      the control system controlling an access control system;

Figure 6      the control system controlling a surveillance system;

Figure 7      the control system controlling an imaging system;

Figure 8      a training system for controlling the classifier;

Figure 9      a flow-chart diagram of a training method carried out by said training system;

Figure 10     a flow-chart diagram illustrating a method for operating said control system;

Figure 11     an embodiment of a structure of said classifier;

Figure 12     a flow-chart diagram illustrating a method for determining said adversarial input signal $x^{adv}$;

Figure 13     a flow-chart diagram illustrating a method for projecting a modified input signal $x^{mod}$ onto a Wasserstein ball;

Figure 14     a flow-chart diagram illustrating a method for projecting a modified input signal $x^{mod}$ onto a Sinkhorn ball;

Figure 15     a flow-chart diagram illustrating a method for computing $\Pi$ as defined in equation (2) from the maximizing values $\Phi^*$, $\Psi^*$, $\rho^*$ that solve equation (5).

Description of the embodiments

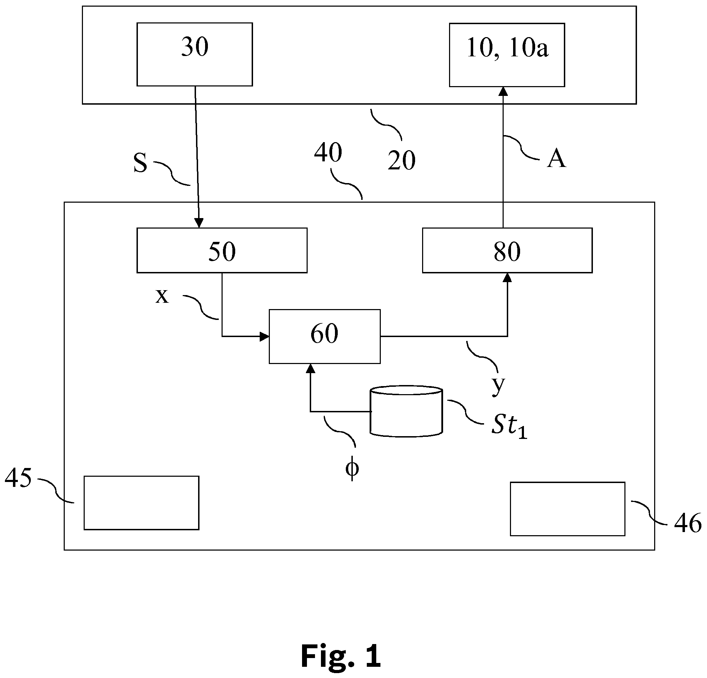

Shown in figure 1 is one embodiment of an actuator 10 in its environment 20. Actuator 10 interacts with a control system 40. Actuator 10 and its environment 20 will be jointly called actuator system. At preferably evenly spaced distances, a sensor 30 senses a condition of the actuator system. The sensor 30 may comprise several sensors. Preferably, sensor 30 is an optical sensor that takes images of the environment 20. An output signal S of sensor 30 (or, in case the sensor 30 comprises a plurality of sensors, an output signal S for each of the sensors) which encodes the sensed condition is transmitted to the control system 40.

Thereby, control system 40 receives a stream of sensor signals S. It then computes a series of actuator control commands A depending on the stream of sensor signals S, which are then transmitted to actuator 10.

Control system 40 receives the stream of sensor signals S of sensor 30 in an optional receiving unit 50. Receiving unit 50 transforms the sensor signals S into input signals x. Alternatively, in case of no receiving unit 50, each sensor signal S may directly be taken as an input signal x. Input signal x may, for example, be given as an excerpt from sensor signal S. Alternatively, sensor signal S may be processed to yield input signal x. Input signal x comprises image data corresponding to an image recorded by sensor 30. In other words, input signal x is provided in accordance with sensor signal S.

Input signal x is then passed on to an image classifier 60, which may, for example, be given by an artificial neural network.

Classifier 60 is parametrized by parameters $\phi$, which are stored in and provided by parameter storage $St_1$.

Classifier 60 determines output signals y from input signals x. The output signal y comprises information that assigns one or more labels to the input signal x Output signals y are transmitted to an optional conversion unit 80, which converts the output signals y into the control commands A. Actuator control commands A are then transmitted to actuator 10 for controlling actuator 10 accordingly. Alternatively, output signals y may directly be taken as control commands A.

Actuator 10 receives actuator control commands A, is controlled accordingly and carries out an action corresponding to actuator control commands A. Actuator 10 may comprise a control logic which transforms actuator control command A into a further control command, which is then used to control actuator 10.

In further embodiments, control system 40 may comprise sensor 30. In even further embodiments, control system 40 alternatively or additionally may comprise actuator 10.

In still further embodiments, it may be envisioned that control system 40 controls a display 10a instead of an actuator 10.

Furthermore, control system 40 may comprise a processor 45 (or a plurality of processors) and at least one machine-readable storage medium 46 on which instructions are stored which, if carried out, cause control system 40 to carry out a method according to one aspect of the invention.

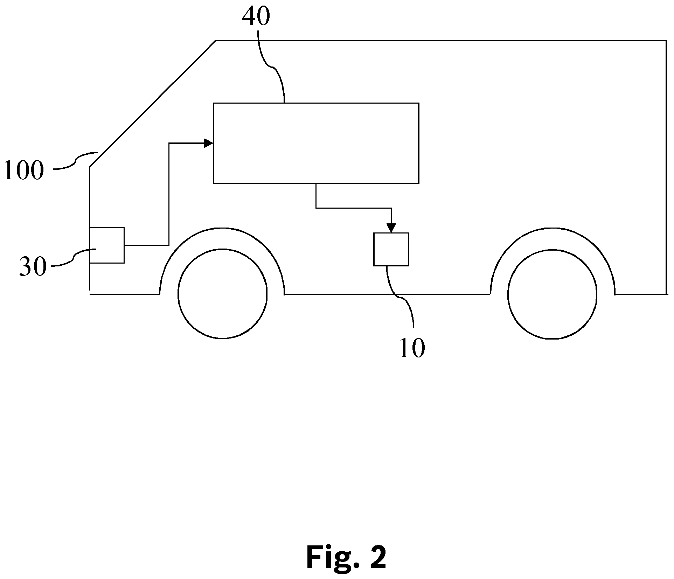

Figure 2 shows an embodiment in which control system 40 is used to control an at least partially autonomous robot, e.g. an at least partially autonomous vehicle 100.

Sensor 30 may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in vehicle 100. Alternatively or additionally sensor 30 may comprise an information system for determining a state of the actuator system. One example for such an information system is a weather information system which determines a present or future state of the weather in environment 20.

For example, using input signal x, the classifier 60 may for example detect objects in the vicinity of the at least partially autonomous robot. Output signal y may comprise an information which characterizes where objects are located in the vicinity of the at least partially autonomous robot. Control command A may then be determined in accordance with this information, for example to avoid collisions with said detected objects.

Actuator 10, which is preferably integrated in vehicle 100, may be given by a brake, a propulsion system, an engine, a drivetrain, or a steering of vehicle 100.

Actuator control commands A may be determined such that actuator (or actuators) 10 is/are controlled such that vehicle 100 avoids collisions with said detected objects. Detected objects may also be classified according to what the classifier 60 deems them most likely to be, e.g. pedestrians or trees, and actuator control commands A may be determined depending on the classification.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, actuator command control A may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses sensor 30, preferably an optical sensor, to determine a state of plants in the environment 20. Actuator 10 may be a nozzle for spraying chemicals. Depending on an identified species and/or an identified state of the plants, an actuator control command A may be determined to cause actuator 10 to spray the plants with a suitable quantity of suitable chemicals.

In even further embodiments, the at least partially autonomous robot may be given by a domestic appliance (not shown), like e.g. a washing machine, a stove, an oven, a microwave, or a dishwasher. Sensor 30, e.g. an optical sensor, may detect a state of an object which is to undergo processing by the household appliance. For example, in the case of the domestic appliance being a washing machine, sensor 30 may detect a state of the laundry inside the washing machine. Actuator control signal A may then be determined depending on a detected material of the laundry.

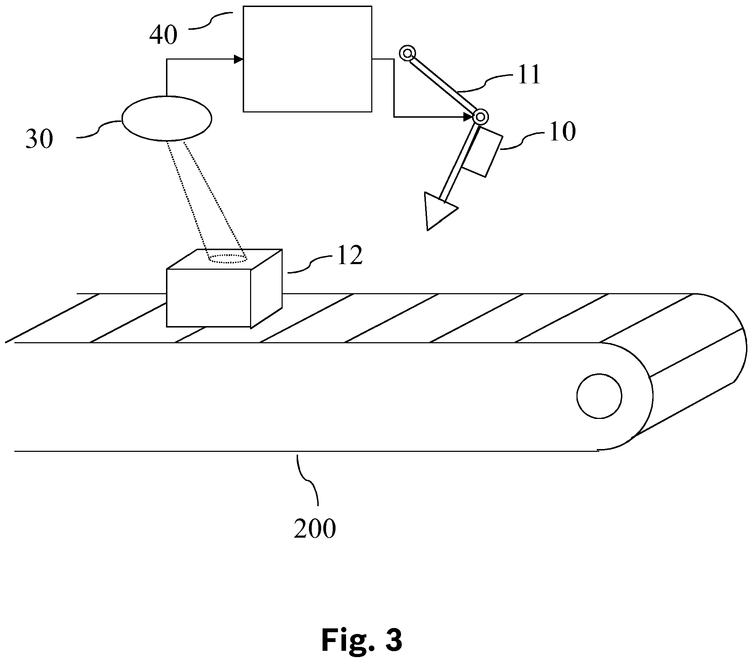

Shown in figure 3 is an embodiment in which control system 40 is used to control a manufacturing machine 11, e.g. a punch cutter, a cutter or a gun drill) of a manufacturing system 200, e.g. as part of a production line. The control system 40 controls an actuator 10 which in turn control the manufacturing machine 11.

Sensor 30 may be given by an optical sensor which captures properties of e.g. a manufactured product 12. Classifier 60 may determine a state of the manufactured product 12 from these captured properties. Actuator 10 which controls manufacturing machine 11 may then be controlled depending on the determined state of the manufactured product 12 for a subsequent manufacturing step of manufactured product 12. Or, it may be envisioned that actuator 10 is controlled during manufacturing of a subsequent manufactured product 12 depending on the determined state of the manufactured product 12.

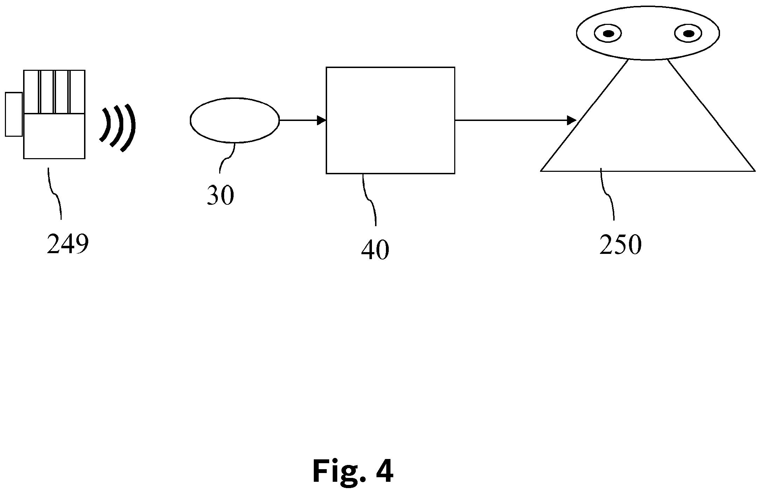

Shown in figure 4 is an embodiment in which control system 40 is used for controlling an automated personal assistant 250. Sensor 30 may be an optic sensor, e.g. for receiving video images of a gestures of user 249. Alternatively, sensor 30 may also be an audio sensor e.g. for receiving a voice command of user 249.

Control system 40 then determines actuator control commands A for controlling the automated personal assistant 250. The actuator control commands A are determined in accordance with sensor signal S of sensor 30. Sensor signal S is transmitted to the control system 40. For example, classifier 60 may be configured to e.g. carry out a gesture recognition algorithm to identify a gesture made by user 249. Control system 40 may then determine an actuator control command A for transmission to the automated personal assistant 250. It then transmits said actuator control command A to the automated personal assistant 250.

For example, actuator control command A may be determined in accordance with the identified user gesture recognized by classifier 60. It may then comprise information that causes the automated personal assistant 250 to retrieve information from a database and output this retrieved information in a form suitable for reception by user 249.

In further embodiments, it may be envisioned that instead of the automated personal assistant 250, control system 40 controls a domestic appliance (not shown) controlled in accordance with the identified user gesture. The domestic appliance may be a washing machine, a stove, an oven, a microwave or a dishwasher.

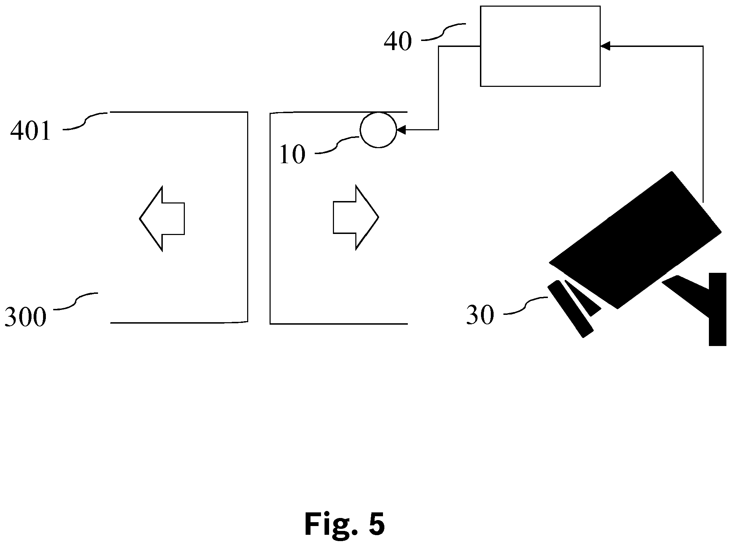

Shown in figure 5 is an embodiment in which control system controls an access control system 300. Access control system may be designed to physically control access. It may, for example, comprise a door 401. Sensor 30 is configured to detect a scene that is relevant for deciding whether access is to be granted or not. It may for example be an optical sensor for providing image or video data, for detecting a person's face. Classifier 60 may be configured to interpret this image or video data e.g. by matching identities with known people stored in a database, thereby determining an identity of the person. Actuator control signal A may then be determined depending on the interpretation of classifier 60, e.g. in accordance with the determined identity. Actuator 10 may be a lock which grants access or not depending on actuator control signal A. A non-physical, logical access control is also possible.

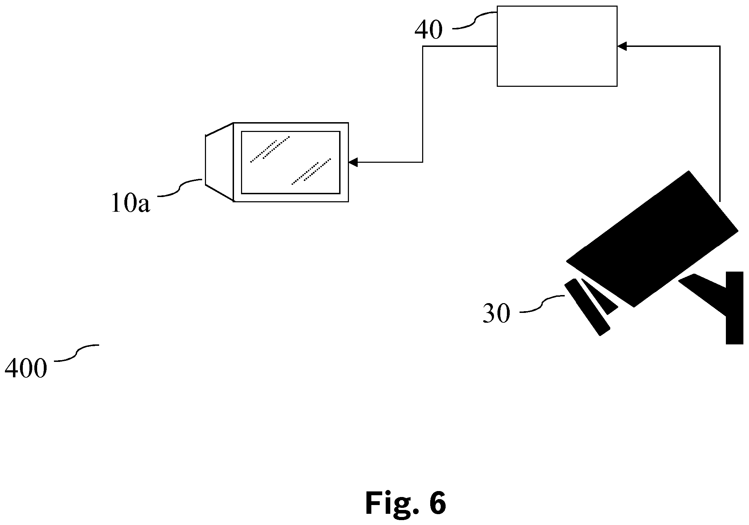

Shown in figure 6 is an embodiment in which control system 40 controls a surveillance system 400. This embodiment is largely identical to the embodiment shown in figure 5. Therefore, only the differing aspects will be described in detail. Sensor 30 is configured to detect a scene that is under surveillance. Control system does not necessarily control an actuator 10, but a display 10a. For example, the machine learning system 60 may determine a classification of a scene, e.g. whether the scene detected by optical sensor 30 is suspicious. Actuator control signal A which is transmitted to display 10a may then e.g. be configured to cause display 10a to adjust the displayed content dependent on the determined classification, e.g. to highlight an object that is deemed suspicious by machine learning system 60.

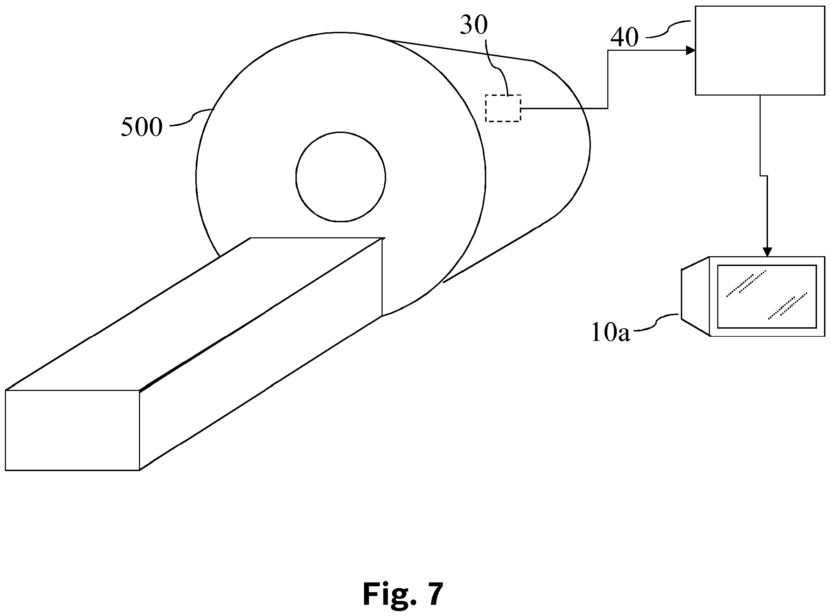

Shown in figure 7 is an embodiment of a control system 40 for controlling an imaging system 500, for example an MRI apparatus, x-ray imaging apparatus or ultrasonic imaging apparatus. Sensor 30 may, for example, be an imaging sensor. Machine learning system 60 may then determine a classification of all or part of the sensed image. Actuator control signal A may then be chosen in accordance with this classification, thereby controlling display 10a. For example, machine learning system 60 may interpret a region of the sensed image to be potentially anomalous. In this case, actuator control signal A may be determined to cause display 10a to display the imaging and highlighting the potentially anomalous region.

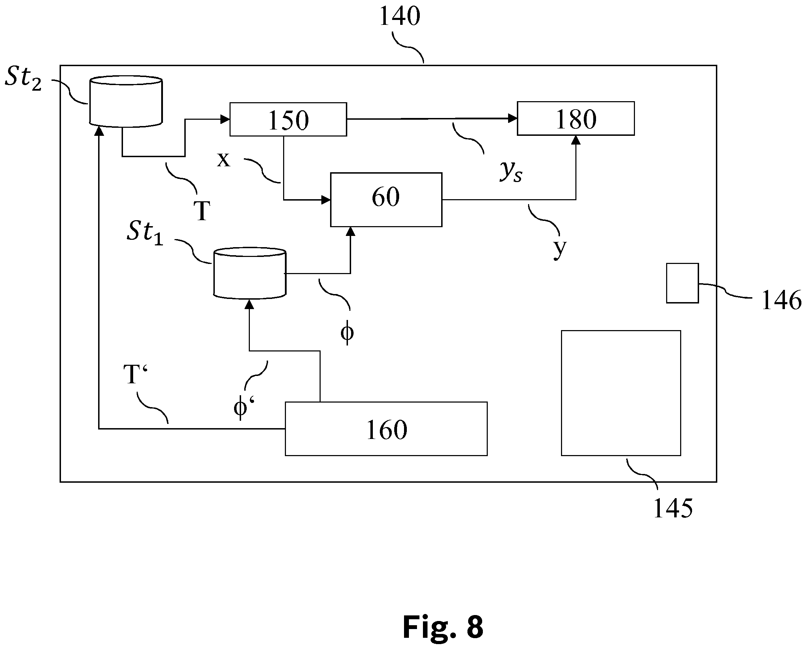

Shown in figure 8 is an embodiment of a training system 140 for training classifier 60. A training data unit 150 determines input signals x, which are passed on to classifier 60. For example, training data unit 150 may access a computer implemented database $St_2$ in which a set T of training data is stored. Set T comprises pairs of input signal x and corresponding desired output signal $y_s$. Training data unit 150 selects samples from set T, e.g. randomly. Input signal x of a selected sample is passed on to classifier 60. Desired output signal $y_s$ is passed on to assessment unit 180.

Classifier 60 is configured to compute output signals y from input signals x. These output signals x are also passed on to assessment unit 180.

A modification unit 160 determines updated parameters $\phi'$ depending on input from assessment unit 180. Updated parameters $\phi'$ are transmitted to parameter storage $St_1$ to replace present parameters $\phi$.

For example, it may be envisioned that assessment unit 180 determines the value of a loss function $\mathcal{L}$ depending on output signals y and desired output signals $y_s$. Modification unit 160 may then compute updated parameters $\phi'$ using e.g. stochastic gradient descent to optimize the loss function $\mathcal{L}$.

Furthermore, modification unit 160 may compute an adversarial dataset T' comprising modified input signals $x^{adv}$ based on original input signals x taken, for example, from training set T and their respective desired output signals $y_s$.

Furthermore, training system 140 may comprise a processor 145 (or a plurality of processors) and at least one machine-readable storage medium 146 on which instructions are stored which, if carried out, cause control system 140 to carry out a method according to one aspect of the invention.

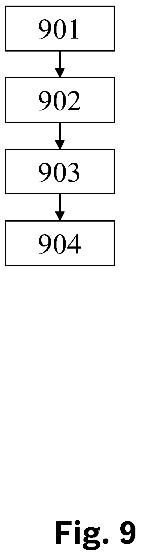

Shown in figure 9 is a flow-chart diagram of an embodiment of the method for training classifier 60, what may be implemented by training system 140.

First (901), classifier 60 is trained with training data of set T in a conventional manner, as discussed above.

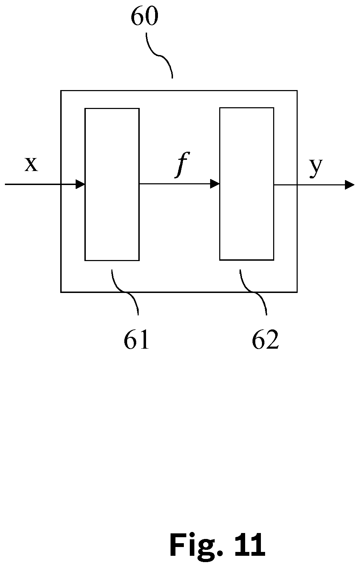

Then (902), one or more adversarial input signals $x^{adv}$ and corresponding desired output signals $y_s$ are generated with the method according illustrated in figure 11 by modifying input signals from data set T and leaving the corresponding desired output signal $y_s$ unchanged. These one or more pairs of adversarial input signal $x^{adv}$ and corresponding desired output signals y are added to adversarial dataset T'.

Now (903), classifier 60 is trained with training data of set adversarial dataset T'. The trained classifier 60 may then (904) be used for providing an actuator control signal A by receiving sensor signal S comprising data from sensor 30, determining the input signal x depending on said sensor signal S, and feeding said input signal x into classifier 60 to obtain output signal y that characterizes a classification of input signal x. Actuator 10 or 10a may then be controlled in accordance with provided actuator control signal A. This concludes the method.

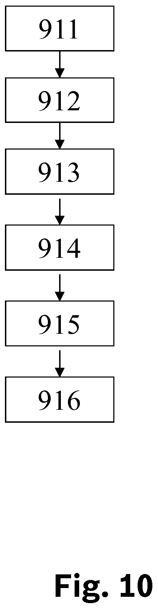

Shown in figure 10 is a flow-chart diagram of an embodiment of the method for operating classifier 60, which may be implemented by control system 40.

First (911), parameters $\phi$ that characterize the operation of classifier 60 are provided. Conventionally, they are obtained by a training method for training classifier 60, e.g. by supervised training as outlined above.

The trained classifier 60 may then (912) be used for providing a first output signal y1 by receiving sensor signal S comprising data from sensor 30, determining the input signal x depending on said sensor signal S, and inputting said input signal x into classifier 60 to obtain first output signal y1 that characterizes a classification of input signal x.

Then (913), an adversarial input signal $x^{adv}$ is generated with the method according illustrated in figure 11 by modifying input signal x.

This adversarial input signal $x^{adv}$ is then (914) inputted into classifier 60 to obtain a second output signal y2 that characterizes a classification of adversarial input signal $x^{adv}$.

Next (915), a parameter vu indicating a vulnerability of classifier 60 is computed based on said first output signal y1 and said second output signal y2. For example, it is possible to set said parameter vu to a first value (for example "1") indicating a vulnerability, if said first output signal y1 is not equal to said second output signal y2, and equal to a first value (for example "0") indicating a non-vulnerability, if said first output signal y1 is equal to said second output signal y2.

An actuator control signal (A) may then (916) be determined in accordance with said parameter vu, and actuator (10) may be controlled in accordance with said actuator control signal (A). For example, if said parameter vu indicates a non-vulnerability, said actuator control signal (A) may then be determined to correspond to normal operation mode, whereas, if said parameter vu indicates a vulnerability, said actuator control signal (A) may then be determined to correspond to a fail-safe operation mode, by e.g. reducing a dynamics of a motion of said actuator (10).

Figure 11 illustrates schematically a structure of one embodiment of classifier 60. Input signal x is inputted into processing unit 61, which may, for example, be given by all but the last layer of a neural network. Processing unit 61 is configured to output a vector $f$ comprising preferably at least one entry $z_\ell$ for each of the possible classes $\ell$ for classification. Said vector $f$ is inputted into a selector 62, which may be given, e.g., by an implementation of an argmax function. Selector 62 is configured to output signal y, which corresponds to the class corresponding to that one of the entries $f_\ell$ of vector $f$ that has the highest value. To highlight the dependence on input signal x, vector $f$ will also be denoted $f(x)$.

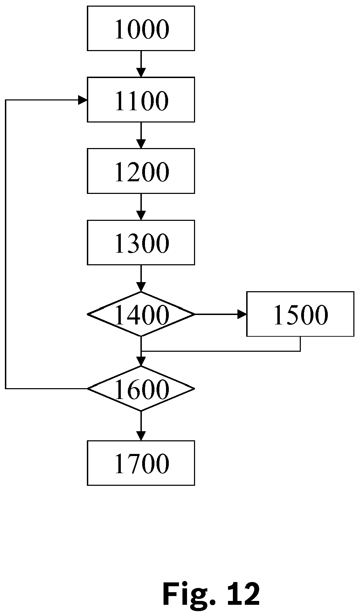

Figure 12 illustrates a method for determining an adversarial input signal $x^{adv}$ based on a given input signal x, which will also be called original input signal $x^{org}$. This method may be implemented by control system 40 or by training system 140. In an initialization step (1000), a counter variable may be initialized as *counter* = 0, a step size $\tau$ may be initialized as e.g. $\tau = 20$ and a modified input signal $x^{mod}$ may be initialized as $x^{mod}=x$. Original input signal $x^{org}$ is inputted into classifier 60 and resulting output signal y is determined. A correct classification $\ell_0$ is initialized as $\ell_0 = y$. A target classification $\ell \neq \ell_0$ may be selected either randomly or e.g. by setting it to a predefined value, or by selecting it as that classification $\ell \neq \ell_0$ that is closest to correct classification $\ell_0$. For example, target classification $\ell$ may be determined as that classification that corresponds to the second largest entry $f_\ell$ of vector $f$. May be targeted or untargeted attack

Then (1100), modified input signal $x^{mod}$ is inputted into classifier 60 and corresponding vector $f(x^{mod})$ is determined. Then, a scalar function $g(x) = f(x)_\ell - f(x)_{\ell_0}$ is evaluated and its gradient $\nabla g(x)|_{x=x^{mod}}$ is determined. Modified input signal $x^{mod}$ may be updated as

$$x^{mod} = x^{mod} + \tau \cdot \nabla g(x)|_{x=x^{mod}}. \qquad (1)$$

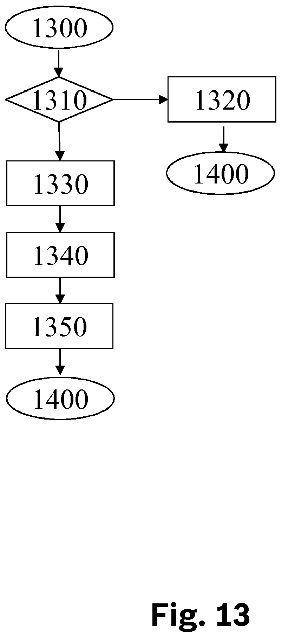

Next (1200), a projected input signal $x^{proj}$ is be determined by projecting modified input signal $x^{mod}$ onto a Wasserstein ball with a predefined radius $\varepsilon$ centered around original input signal $x^{org}$. This projection may be carried out with one of the methods illustrated in figures 13 and 14.

Then (1300), the counter is incremented $counter \leftarrow counter + 1$ and it is checked (1400), if the counter is a multiple of a predefined number, e.g. 20. If that is the case (1500), the counter is reset to $counter = 0$ and step size $\tau$ is increased by a predefined factor, e.g. $\tau \leftarrow \tau \cdot 1.1$.

Both of steps (1400) and (1500) are followed by checking (1600) whether the counter is less than a predefined maximum counter $counter_{max}$, i.e. if $counter < counter_{max}$. Furthermore, modified input signal $x^{mod}$ is set equal to projected input signal $x^{proj}$, and scalar $g(x^{mod})$ is evaluated. If $counter < counter_{max}$ and if $g(x^{mod}) \leq ub$ with an upper bound ub which may be set to any non-negative number, e.g. ub = 0 (i.e. classification has not changed from correct classification $\ell_0$ to target classification $\ell$), the method iterates back to step (1200). If not (1600), adversarial input signal $x^{adv}$ is provided as equal to modified input signal $x^{mod}$. Optionally, if $g(x^{adv}) \leq ub$ an error message may be provided indicating that no adversarial has been found with the desired confidence. This concludes the method.

Figure 13 illustrates a method for determining projected input signal $x^{proj}$ from modified input signal $x^{mod}$. This projection involves the computation of a Wasserstein distance $W_D(P, Q)$ between two n-dimensional vectors $P$ and $Q$ which are given as P = $(P_1, \dots, P_n)$ and Q = $(Q_1, \dots, Q_n)$. Distances between indices $i$ and $j$ are stored in a matrix $D_{ij} \in R^{n \times n}$ (where $D_{ij} = \|i - \|^p$ for some pre-defined value of p) and the Wasserstein distance $W_D(P, Q)$ can be computed as

$$W_D(P,Q) = \min_{\substack{R^{n \times n} \ni \Pi \geq 0 \\ \Pi 1 = P \\ \Pi^T 1 = Q}} tr(\Pi^T D) = \max_{\substack{\Phi, \Psi \in R^n \\ \forall i,j: \Phi_i \leq \Psi_j + D_{ij}}} P^T \Phi - Q^T \Psi. \qquad (2)$$

(Here, the 1 in $\Pi 1 = P$, $\Pi^T 1 = Q$ denotes an n-dimensional vector of ones). Determining said projected input signal $x^{proj}$ then corresponds to solving equation

$$\min_{W_D(x^{mod}, x^{org^*}) \leq \epsilon} L_2(x^{proj}, x^{org}). \qquad (3)$$

(Of course, the $L_2$-metric may be replaced by any other metric).

First (1310), it is determined whether the Wasserstein distance $W_D(x^{mod}, x^{org})$ between modified input signal $x^{mod}$ and original input signal $x^{org}$ is not larger than predefined radius $\varepsilon$, i.e. if

$$W_D(x^{mod}, x^{org}) \leq \epsilon. \qquad (4)$$

If that is the case (1320), projected input signal $x^{proj}$ is set equal to modified input signal $x^{mod}$, and the method ends.

If that is not case (1330), and denoting $P = x^{mod}$ and $Q = x^{org}$, equation

$$\max_{\substack{\Phi, \Psi \in R^n, \rho \in R \\ \forall i,j: \Phi_i \leq \Psi_j + \rho \cdot D_{ij}}} P^T \Phi - Q^T \Psi - \left[\frac{1}{2}\|\Psi\|^2 + \rho \cdot \epsilon\right] \qquad (5)$$

is solved with e.g. projected gradient ascent to yield maximizing values $\Phi^*, \Psi^*, \rho^*$. It will be appreciated that equation (5) is a dual formulation to a primal problem given by equations (3) and (2).

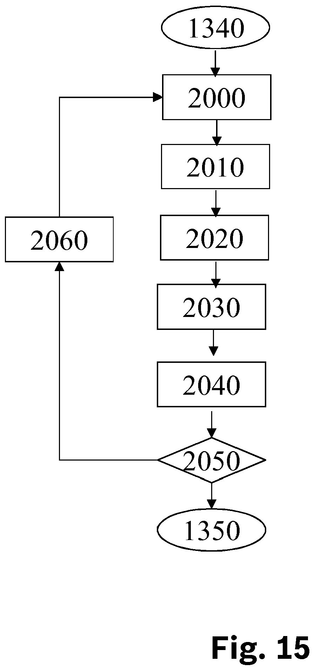

Next (1340), $\Pi$ as defined in equation (2) is determined from the maximizing values $\Phi^*, \Psi^*, \rho^*$ using e.g. the method illustrated in figure 15.

Then (1350), projected input signal $x^{proj}$ is set equal to $x^{proj} = \Pi^T 1$. This concludes the method.

Figure 14 illustrates another, approximate but more efficient method, wherein instead of using a Wasserstein distance $W_D$ ($P,Q$) as defined in equation (2) for defining the ball on which to project, one uses a Sinkhorn distance $W_D^\lambda(P,Q)$ by subtracting an entropic term $E_T$, i.e.

$$W_D^\lambda(P,Q) = \min_{\substack{\mathbb{R}^{n\times n}\ni\Pi\geq 0 \\ \Pi 1=P \\ \Pi^\top 1=Q}} tr(\Pi^\top D) + E_T \ , \tag{6}$$

$$E_T = \frac{1}{\lambda}\sum_{\Pi_{ij}>0}\Pi_{ij}\log(\Pi_{ij}) \tag{7}$$

with a predefined variable $\lambda \neq 0$, e.g. $\lambda = 1$.

First (1311), it is determined whether the Sinkhorn distance $W_D^\lambda\left(x^{mod}, x^{org}\right)$ between modified input signal $x^{mod}$ and original input signal $x^{org}$ is not larger than predefined radius $\varepsilon$, i.e. if

$$W_D^\lambda\left(x^{mod}, x^{org}\right) \leq \epsilon. \tag{8}$$

If that is the case (1321), projected input signal $x^{proj}$ is set equal to modified input signal $x^{mod}$, and the method ends.
If that is not case (1331), and denoting $P = x^{mod}$ and $Q = x^{org}$, a variable $\rho$ is initialized as $\rho = 1$ and two n-dimensional vectors $R, S$ are initialized by setting each of their components equal to e.g. $R_i = S_i = 1/n$.
Then (1341), an exponential $n \times n$-dimensional matrix $K$ is computed as

$$K = \exp\left(-\lambda \cdot \rho \cdot D\right). \tag{9}$$

Next (1351), components $R_i$ of matrix $R$ are updated as

$$R_i = P_i/(K \cdot S)_i \tag{10}$$

and components $S_i$ of matrix S are updated as

$$S_i = W_0\left(\exp\left(\lambda Q_i - \frac{1}{2}\right) \cdot tmp_i\right)/tmp_i \tag{11}$$

with

$$tmp = \lambda \cdot K^T R. \tag{12}$$

Then (1361), scalars $g$ and $h$ are computed as

$$g = \langle R, \ DKS\rangle - \epsilon \tag{13}$$

$$h = -\lambda\langle R, DDKS\rangle \tag{14}$$

where $\langle...\rangle$ denotes a scalar product, i.e. entry-wise multiplication followed by a sum over all multiplied entries. A value $\alpha$ is set to a positive value, e.g. $\alpha = 1$.

Then (1371), $\alpha$ is set such that $\rho \approx \alpha\frac{g}{h}$ but also $\rho \geq \alpha\frac{g}{h}$, e.g. by updating $\alpha \leftarrow \frac{\alpha}{2}$ as long as $\rho < \alpha\frac{g}{h}$.

Now (1381), $\rho$ is updated as $\rho \leftarrow \rho - \alpha \frac{g}{h}$ .

Next (1391), it is checked whether the method as converged, e.g. if changes to $R$ and/or $S$ over the last iteration are sufficiently small (e.g. less than a predefined threshold). If that is not the case, the method iterates back to step (1341). If the method has converged, however, step (1392) follows.

In this step, one sets

$$\Pi_{ij} = \langle R_i, K \cdot S_i \rangle \qquad (15)$$

$$x^{proj} = \Pi^T 1 \qquad (16)$$

This concludes the method.

Figure 15 illustrates an embodiment to compute $\Pi$ as defined in equation (2) from the maximizing values $\Phi^*$, $\Psi^*$, $\rho^*$ as obtained from the solution of equation (5) in step (1330). First (2000), variable $i$ is initialized as $i = 1$. Then (2010), all values of $j \in \{1, ..., n\}$ are identified for which $\Phi_i^* < \Psi_j^* + \rho^* \cdot D_{ij}$ holds. If it does, the corresponding component $\Pi_{ij}$ is set to $\Pi_{ij} = 0$. Then (2020), all values of $j \in \{1, ..., n\}$ are identified for which $\Phi_i^* = \Psi_j^* + \rho^* \cdot D_{ij}$ holds (i.e. all remaining values of $j$), and stored in a set $J$. Next (2030), the number of elements in $J$ is counted and denoted $sz(J)$. Then (2040), for all $j \in J$, the corresponding component $\Pi_{ij}$ is set to $\Pi_{ij} = p_i/sz(j)$. It is then checked (2060), if $i < n$ holds. If this is the case (2070), $i$ is incremented $i \leftarrow i + 1$ and the method iterates back to step (2010). If not, the method concludes and continues in step (1350).

The term "computer" covers any device for the processing of pre-defined calculation instructions. These calculation instructions can be in the form of software, or in the form of hardware, or also in a mixed form of software and hardware.

It is further understood that the procedures cannot only be completely implemented in software as described. They can also be implemented in hardware, or in a mixed form of software and hardware.


## Claims

1. A computer-implemented method for assessing a robustness of an image classifier (60), wherein the image classifier (60) detects where objects are located in a vicinity of an at least partially autonomous robot from data received from one ore more video sensors or the classifier (60) determines a state of a manufactured product (12) from captured properties by an optical sensor (30) which captures properties of the manufactured product (12), wherein the method comprises the steps of:

    - receiving a sensor signal (S) comprising data from the one or more video sensors or from the optical sensor (30),
    - determining an original input image ($x^{org}$) which depends on said sensor signal (S),
    - determining, by the image classifier (60), a first class (y1) that characterizes a classification of said original input image (xorg);
    - determining an adversarial input image ($x^{adv}$) with a method of obtaining an adversarial input image ($x^{adv}$) to the image classifier (60),
    - determining, by the image classifier (60), a second class (y2) that characterizes said adversarial input image ($x^{adv}$) and
    - determining a robustness value (vu) indicating a vulnerability of the classifier (60) depending on said first class (y1) and on said second class (y2), wherein the robustness value (vu) is set to a first value, for example "1", indicating a vulnerability, if said first class (y1) is not equal to said second class (y2), and the robustness value (vu) is set to a second value, for example "0", indicating a non-vulnerability, if said first class (y1) is equal to said second class (y2);
    wherein the method for obtaining the adversarial input image ($x^{adv}$) to the image classifier is obtained from an original input image ($x^{org}$), and wherein said adversarial input image and said original input image cause the image classifier (60) to classify said original input image ($x^{org}$) as belonging to a first class ($\ell_0$) and said adversarial input image ($x^{adv}$) as belonging to a second class ($\ell$), comprising the steps of:

- modifying said original input image ($x^{org}$) to yield a modified input image ($x^{mod}$);
- projecting said modified input image ($x^{mod}$) onto a metric ball around said original input image ($x^{org}$) to yield a projected input image ($x^{proj}$); and
- obtaining said adversarial input image ($x^{adv}$) depending on said projected input image ($x^{proj}$),

**characterized in that**

said metric is an at least approximate Wasserstein distance ($W_D$, $W_D^{\lambda}$ ) and that said at least approximate Wasserstein distance is a Sinkhorn distance ( $W_D^{\lambda}$ ) which differs from said Wasserstein distance ($W_D$) by an entropic term ($E_T$), and for any pair of first distribution (P) and second distribution (Q), said entropic term ($E_T$) characterizes an entropy of a distribution $\Pi$ that satisfies $\Pi 1_n$ =P, $\Pi^T 1_n$ =Q.

2. The method according to claim 1, wherein said projected input image ($x^{proj}$) is determined by minimizing a distance to said modified input image ($x^{mod}$) under a constraint that a distance, according to said at least approximate Wasserstein distance ($W_D$, $W_D^{\lambda}$, ) is not larger than a predefined radius ($\varepsilon$) of said metric ball.

3. The method according to claim 2, wherein said minimization is obtained by maximizing a dual problem corresponding to a primal problem that is given by said minimization under said constraints.

4. The method according to claim 1 or 2, wherein said projected input image ($x^{proj}$) is determined by solving a convex optimization corresponding to said minimization.

5. The method according to any one of the above claims, wherein said image classifier (60), when provided with an input image (x), is configured to output a first classification value ($f_{l_0}$) corresponding to said first class ($\ell_0$) and a second classification value ($f_l$) corresponding to said a predefined second class ($\ell$), and wherein said modified input image ($x^{mod}$) causes a difference ($g$) between said first classification value ($f_{l_0}$) and said second classification value ($f_l$) to be smaller than the difference ($g$) caused by said original input image ($x^{org}$).

6. The method according to any one of claims 1 to 5, wherein said image classifier (60), when provided with an input image (x), is configured to output a first classification value ($f_{l_0}$) corresponding to said first class ($\ell_0$), and wherein said modified input image ($x^{mod}$) causes said first classification value ($f_{l_0}$) to be smaller than said first classification value ($f_{l_0}$) caused by said original input image ($x^{org}$).

7. The method according to any one of the above claims, wherein the steps of modifying said original input image ($x^{org}$) to yield said modified input image ($x^{mod}$) and projecting said modified input image ($x^{mod}$) onto said predefined subset to yield said projected input image ($x^{proj}$) are carried out iteratively by using said projected input image ($x^{proj}$) of a preceding iteration as original input image ($x^{org}$) a subsequent iteration, wherein said step projecting said modified input image ($x^{mod}$) onto said predefined subset is carried out after each step of modifying said original input image ($x^{org}$).

8. A computer-implemented method for training an image classifier (60), wherein the classifier (60) detects where objects are located in a vicinity of an at least partially autonomous robot from data received from one or more video sensors or the classifier (60) determines a state of a manufactured product (12) from captured properties by an optical sensor which captures properties of the manufactured product (12), comprising the steps of:

- accessing, from a memory (146), the image classifier (60), the image classifier (60) having been trained using a plurality of training input signals, the training images being labeled for a plurality of classes;
- receiving a sensor signal (S) comprising data from the one or more video sensors or from the optical sensor (30),
- determining an original input image ($X_{org}$) which depends on said sensor signal (S),
- determining an adversarial input image ($X_{adv}$) with a method of obtaining an adversarial input image ($X_{adv}$) to the image classifier (60), wherein the method for obtaining the adversarial input image ($X_{adv}$) to the image classifier is obtained from an original input image ($X_{org}$), and wherein said adversarial input image ($X_{adv}$) and said original input image ($X_{org}$) cause the image classifier (60) to classify said original input image ($X_{org}$) as belonging to a first class ($\ell_0$) and said adversarial input image ($X_{adv}$) as belonging to a second class ($\ell$) different from said first class ($\ell_0$), comprising the steps of:

- modifying said original input image ($X_{org}$) to yield a modified input image ($X_{mod}$);
- projecting said modified input image ($X_{mod}$) onto a metric ball around said original input image ($X_{org}$) to yield a projected input image ($X_{proj}$); and
- obtaining said adversarial input image ($X_{adv}$) depending on said projected input image ($X_{proj}$), **characterized in that** said metric is an at least approximate Wasserstein distance ($W_{D_\lambda}$, $W_D^\lambda$) and that said at least approximate Wasserstein distance is a Sinkhorn distance a ($W_D^\lambda$) which differs from said Wasserstein distance ($W_D$) by an entropic term ($E_T$), and for any pair of first distribution (P) and second distribution (Q), said entropic term ($E_T$) characterizes an entropy of a distribution $\Pi$ that satisfies $\Pi 1_n = P$, $\Pi^T 1_n = Q$;
- further training the image classifier (60) to have improved accuracy using at least the adversarial input image ($x^{adv}$).

9. A computer-implemented method for providing an actuator control signal (A) for controlling an actuator (10) depending on an output signal (y) of an image classifier (60), comprising the steps of:

- assessing whether said image classifier (60) is robust or not using the method according to claim 1 to 7, and determining said actuator control signal (A) in accordance with a result of said assessment, in particular by determining said actuator control signal (A) to cause said actuator (10) to operate in a safe mode if said image classifier (60) is deemed not robust as a result of said assessment.

10. The method according to claim 9, in which said actuator (10) controls an at least partially autonomous robot (100) and/or a manufacturing machine (200)).

11. Computer program that is configured to cause a computer to carry out the method according to any one of claims 1 to 10 with all of its steps if the computer program is carried out by a processor (45, 145).

12. Machine-readable storage medium (46, 146) on which the computer program according to claim 11 is stored.

13. System (140) that is configured to carry out the method according to claim 1 to 10.

**Patentansprüche**

1. Computer-implementiertes Verfahren zum Beurteilen einer Robustheit eines Bildklassifikators (60), wobei der Bildklassifikator (60) aus von einem oder mehreren Videosensoren empfangenen Daten detektiert, wo sich Objekte in einer Nähe eines zumindest teilweise autonomen Roboters befinden, oder der Klassifikator (60) einen Zustand eines hergestellten Produkts (12) aus durch einen optischen Sensor (30) erfassten Eigenschaften bestimmt, der Eigenschaften des hergestellten Produkts (12) erfasst,

wobei das Verfahren die folgenden Schritte beinhaltet:

- Empfangen eines Daten beinhaltenden Sensorsignals (S) von dem einen oder den mehreren Videosensoren oder von dem optischen Sensor (30),
- Bestimmen eines Original-Eingabebilds ($x^{org}$), das von dem Sensorsignal (S) abhängt,
- Bestimmen, durch den Bildklassifikator (60), einer ersten Klasse (y1), die eine Klassifikation des Original-Eingabebilds ($x_{org}$) charakterisiert;
- Bestimmen eines adversarialen Eingabebilds ($x^{adv}$) mit einem Verfahren zum Erhalten eines adversarialen Eingabebilds ($x^{adv}$) für den Bildklassifikator (60),
- Bestimmen, durch den Bildklassifikator (60), einer zweiten Klasse (y2), die das adversariale Eingabebild ($x^{adv}$) charakterisiert, und
- Bestimmen eines Robustheitswerts (vu), der eine Anfälligkeit des Klassifikators (60) anzeigt, in Abhängigkeit von der ersten Klasse (y1) und von der zweiten Klasse (y2), wobei der Robustheitswert (vu) auf einen ersten Wert, zum Beispiel "1", eingestellt wird, der eine Anfälligkeit anzeigt, wenn die erste Klasse (y1) nicht gleich der zweiten Klasse (y2) ist, und der Robustheitswert (vu) auf einen zweiten Wert, zum Beispiel "0", eingestellt wird, der eine Nicht-Anfälligkeit anzeigt, wenn die erste Klasse (y1) gleich der zweiten Klasse (y2) ist;

wobei das Verfahren zum Erhalten des adversarialen Eingabebilds ($x^{adv}$) für den Bildklassifikator aus einem Original-Eingabebild ($x^{org}$) erhalten wird, und wobei das adversariale Eingabebild und das Original-Eingabebild bewirken, dass der Bildklassifikator (60) das Original-Eingabebild ($x^{org}$)als zu einer ersten Klasse ($\ell_0$) gehörend und das adversariale Eingabebild ($x^{adv}$) als zu einer zweiten Klasse ($\ell$) gehörend klassifiziert, umfassend die folgenden Schritte:

- Modifizieren des Original-Eingabebilds ($x^{org}$), um ein modifiziertes Eingabebild ($x^{mod}$) zu erlangen;
- Projizieren des modifizierten Eingabebilds ($x^{mod}$) auf eine metrische Kugel um das Original-Eingabebild ($x^{org}$), um ein projiziertes Eingabebild ($x^{proj}$) zu erlangen; und
- Erhalten des adversarialen Eingabebilds ($x^{adv}$) in Abhängigkeit von dem projizierten Eingabebild ($x^{proj}$),

**dadurch gekennzeichnet, dass**

die Metrik eine zumindest annähernde Wasserstein-Distanz ($W_D$, $W_D^{\lambda}$) ist und dass die zumindest annähernde Wasserstein-Distanz eine Sinkhorn-Distanz ($W_D^{\lambda}$) ist, die sich von der Wasserstein-Distanz ($W_D$) um einen entropischen Term ($E_T$) unterscheidet, und für ein beliebiges Paar aus erster Verteilung (P) und zweiter Verteilung (Q) der entropische Term ($E_T$) eine Entropie einer Verteilung $\Pi$ charakterisiert, die $\Pi 1_n = P$, $\Pi^T 1_n = Q$ erfüllt.

2. Verfahren nach Anspruch 1, wobei das projizierte Eingabebild ($x^{proj}$) durch Minimieren einer Distanz zu dem modifizierten Eingabebild ($x^{mod}$) unter einer Bedingung bestimmt wird, dass eine Distanz gemäß der zumindest annähernden Wasserstein-Distanz ($W_D$, $W_D^{\lambda}$) nicht größer als ein vordefinierter Radius ($\varepsilon$) der metrischen Kugel ist.

3. Verfahren nach Anspruch 2, wobei die Minimierung durch Maximieren eines dualen Problems erhalten wird, das einem primalen Problem entspricht, das durch die Minimierung unter den Bedingungen vorgegeben ist.

4. Verfahren nach Anspruch 1 oder 2, wobei das projizierte Eingabebild ($x^{proj}$) durch Lösen einer konvexen Optimierung, die der Minimierung entspricht, bestimmt wird.

5. Verfahren nach einem der vorhergehenden Ansprüche, wobei der Bildklassifikator (60), wenn ihm ein Eingabebild (x) bereitgestellt wird, dazu ausgelegt ist, einen ersten Klassifikationswert ($f_{l_0}$), der der ersten Klasse ($\ell_0$) entspricht, und einen zweiten Klassifikationswert ($f_l$), der einer vordefinierten zweiten Klasse ($\ell$) entspricht, auszugeben, und wobei das modifizierte Eingabebild ($x^{mod}$) bewirkt, dass eine Differenz (g) zwischen dem ersten Klassifikationswert ($f_{l_0}$) und dem zweiten Klassifikationswert ($f_l$) kleiner als die durch das Original-Eingabebild ($x^{org}$) bewirkte Differenz (g) ist.

6. Verfahren nach einem der Ansprüche 1 bis 5, wobei der Bildklassifikator (60), wenn ihm ein Eingabebild (x) bereitgestellt wird, dazu ausgelegt ist, einen ersten Klassifikationswert ($f_{l_0}$) auszugeben, der der ersten Klasse ($\ell_0$) entspricht, und wobei das modifizierte Eingabebild ($x^{mod}$) bewirkt, dass der erste Klassifikationswert ($f_{l_0}$) kleiner als der durch das Original-Eingabebild ($x^{org}$) bewirkte erste Klassifikationswert ($f_{l_0}$) ist.

7. Verfahren nach einem der vorhergehenden Ansprüche, wobei die Schritte zum Modifizieren des Original-Eingabebilds ($x^{org}$), um das modifizierte Eingabebild ($x^{mod}$) zu erlangen, und Projizieren des modifizierten Eingabebilds ($x^{mod}$) auf die vordefinierte Teilmenge, um das projizierte Eingabebild ($x^{proj}$) zu erlangen, iterativ unter Verwendung des projizierten Eingabebilds ($x^{proj}$) einer vorausgehenden Iteration als Original-Eingabebild ($x^{org}$) einer nachfolgenden Iteration ausgeführt werden, wobei der Schritt Projizieren des modifizierten Eingabebilds ($x^{mod}$) auf die vordefinierte Teilmenge nach jedem Schritt zum Modifizieren des Original-Eingabebilds ($x^{org}$) ausgeführt wird.

8. Computer-implementiertes Verfahren zum Trainieren eines Bildklassifikators (60), wobei der Klassifikator (60) aus von einem oder mehreren Videosensoren empfangenen Daten detektiert, wo sich Objekte in einer Nähe eines zumindest teilweise autonomen Roboters befinden, oder der Klassifikator (60) einen Zustand eines hergestellten Produkts (12) aus durch einen optischen Sensor erfassten Eigenschaften bestimmt, der Eigenschaften des hergestellten Produkts (12) erfasst, umfassend die folgenden Schritte:

- Zugreifen, von einem Speicher (146), auf den Bildklassifikator (60), wobei der Bildklassifikator (60) unter Verwendung einer Mehrzahl von Trainingseingabesignalen trainiert wurde, wobei die Trainingsbilder für eine Mehrzahl von Klassen beschriftet sind;
- Empfangen eines Daten beinhaltenden Sensorsignals (S) von dem einen oder den mehreren Videosensoren oder von dem optischen Sensor (30),
- Bestimmen eines Original-Eingabebilds ($X_{org}$), das von dem Sensorsignal (S) abhängt,
- Bestimmen eines adversarialen Eingabebilds ($X_{adv}$) mit einem Verfahren zum Erhalten eines adversarialen Eingabebilds ($X_{adv}$) für den Bildklassifikator (60), wobei das Verfahren zum Erhalten des adversarialen Eingabebilds ($X_{adv}$) für den Bildklassifikator aus einem Original-Eingabebild ($X_{org}$) erhalten wird, und wobei das adversariale Eingabebild ($X_{adv}$) und das Original-Eingabebild ($X_{org}$) bewirken, dass der Bildklassifikator (60) das Original-Eingabebild ($X_{org}$) als zu einer ersten Klasse ($\ell_0$) gehörend und das adversariale Eingabebild ($X_{adv}$) als zu einer zweiten Klasse ($\ell$) gehörend, die sich von der ersten Klasse ($\ell_0$) unterscheidet, klassifiziert, umfassend die folgenden Schritte:
- Modifizieren des Original-Eingabebilds ($X_{org}$), um ein modifiziertes Eingabebild ($X_{mod}$) zu erlangen;
- Projizieren des modifizierten Eingabebilds ($X_{mod}$) auf eine metrische Kugel um das Original-Eingabebild ($X_{org}$), um ein projiziertes Eingabebild ($X_{proj}$) zu erlangen; und
- Erhalten des adversarialen Eingabebilds ($X_{adv}$) in Abhängigkeit von dem projizierten Eingabebild ($X_{proj}$), **da-durch gekennzeichnet, dass** die Metrik eine zumindest annähernde Wasserstein-Distanz ($W_D$, $W_D^\lambda$) ist und dass die zumindest annähernde Wasserstein-Distanz eine Sinkhorn-Distanz ($W_D^\lambda$) ist, die sich von der Wasserstein-Distanz ($W_D$) um einen entropischen Term ($E_T$) unterscheidet, und für ein beliebiges Paar aus erster Verteilung (P) und zweiter Verteilung (Q) der entropische Term ($E_T$) eine Entropie einer Verteilung $\Pi$ charakterisiert, die $\Pi 1_n = P$, $\Pi^T 1_n = Q$ erfüllt;
- ferner Trainieren des Bildklassifikators (60) auf eine verbesserte Genauigkeit unter Verwendung zumindest des adversarialen Eingabebilds ($x^{adv}$).

9.  Computer-implementiertes Verfahren zum Bereitstellen eines Aktuatorsteuersignals (A) zum Steuern eines Aktuators (10) in Abhängigkeit von einem Ausgabesignal (y) eines Bildklassifikators (60), umfassend die folgenden Schritte:

    - Beurteilen, ob der Bildklassifikator (60) robust ist oder nicht, unter Verwendung des Verfahrens nach Anspruch 1 bis 7, und Bestimmen des Aktuatorsteuersignals (A) gemäß einem Ergebnis der Beurteilung, insbesondere durch Bestimmen des Aktuatorsteuersignals (A) derart, dass bewirkt wird, dass der Aktuator (10) in einem sicheren Modus betrieben wird, wenn der Bildklassifikator (60) als Ergebnis der Beurteilung als nicht robust befunden wird.

10. Verfahren nach Anspruch 9, wobei der Aktuator (10) einen zumindest teilweise autonomen Roboter (100) und/oder eine Fertigungsmaschine (200) steuert.

11. Computerprogramm, das dazu ausgelegt ist, zu bewirken, dass ein Computer das Verfahren nach einem der Ansprüche 1 bis 10 mit all seinen Schritten ausführt, wenn das Computerprogramm durch einen Prozessor (45, 145) ausgeführt wird.

12. Maschinenlesbares Speichermedium (46, 146), auf dem das Computerprogramm nach Anspruch 11 gespeichert ist.

13. System (140), das dazu ausgelegt ist, das Verfahren nach Anspruch 1 bis 10 auszuführen.

**Revendications**

1.  Procédé, mis en œuvre par ordinateur, d'évaluation de la robustesse d'un classificateur (60) d'images, le classificateur (60) d'images détectant l'endroit où des objets sont situés au voisinage d'un robot au moins partiellement autonome à partir de données reçues en provenance d'un ou de plusieurs capteurs vidéo ou le classificateur (60) déterminant un état d'un produit fabriqué (12) à partir de propriétés capturées par un capteur optique (30) qui capture des propriétés du produit fabriqué (12),

    le procédé comportant les étapes consistant à :

    - recevoir un signal (S) de capteur comportant des données provenant du ou des capteurs vidéo ou du capteur optique (30),
    - déterminer une image d'entrée d'origine ($x^{org}$) qui dépend dudit signal (S) de capteur,

- faire déterminer, par le classificateur (60) d'images, une première classe (y1) qui caractérise une classification de ladite image d'entrée d'origine (xorg);
- déterminer une image d'entrée contradictoire ($x^{adv}$) à l'aide d'un procédé d'obtention d'une image d'entrée contradictoire ($x^{adv}$) pour le classificateur (60) d'images,
- faire déterminer, par le classificateur (60) d'images, une seconde classe (y2) qui caractérise ladite image d'entrée contradictoire ($x^{adv}$) et
- déterminer une valeur de robustesse (vu) indiquant une vulnérabilité du classificateur (60) en fonction de ladite première classe (y1) et de ladite seconde classe (y2), la valeur de robustesse (vu) étant réglée à une première valeur, par exemple "1", indiquant une vulnérabilité, si ladite première classe (y1) n'est pas égale à ladite seconde classe (y2), et la valeur de robustesse (vu) étant réglée à une seconde valeur, par exemple "0", indiquant une non-vulnérabilité, si ladite première classe (y1) est égale à ladite seconde classe (y2) ;

le procédé d'obtention de l'image d'entrée contradictoire ($x^{adv}$) pour le classificateur d'images étant obtenu à partir d'une image d'entrée d'origine ($x^{org}$), et ladite image d'entrée contradictoire et ladite image d'entrée d'origine amenant le classificateur (60) d'images à classifier ladite image d'entrée d'origine ($x^{org}$) comme appartenant à une première classe ($\ell_0$) et ladite image d'entrée contradictoire ($x^{adv}$) comme appartenant à une seconde classe ($\ell$), comportant les étapes consistant à :

- modifier ladite image d'entrée d'origine ($x^{org}$) pour donner une image d'entrée modifiée ($x^{mod}$) ;
- projeter ladite image d'entrée modifiée ($x^{mod}$) sur une sphère de métrique autour de ladite image d'entrée d'origine ($x^{org}$) pour donner une image d'entrée projetée ($x^{proj}$) ; et
- obtenir ladite image d'entrée contradictoire ($x^{adv}$) en fonction de ladite image d'entrée projetée ($x^{proj}$),

**caractérisé en ce que**

ladite métrique est une distance de Wasserstein au moins approchée ($W_D$, $W_D^{\lambda}$) et **en ce que** ladite distance de Wasserstein au moins approchée est une distance de Sinkhorn ($W_D^{\lambda}$) qui diffère de ladite distance de Wasserstein ($W_D$) par un terme entropique ($E_T$), et pour toute paire d'une première distribution (P) et d'une seconde distribution (Q), ledit terme entropique ($E_T$) caractérise une entropie d'une distribution $\Pi$ qui satisfait $\Pi 1_n = P$, $\Pi^T 1_n = Q$.

2. Procédé selon la revendication 1, ladite image d'entrée projetée ($x^{proj}$) étant déterminée en minimisant une distance à ladite image d'entrée modifiée ($x^{mod}$) sous la contrainte qu'une distance, selon ladite distance de Wasserstein au moins approchée ($W_D$, $W_D^{\lambda}$) ne soit pas plus grande qu'un rayon prédéfini ($\varepsilon$) de ladite sphère de métrique.

3. Procédé selon la revendication 2, ladite minimisation étant obtenue en maximisant un problème dual correspondant à un problème primal qui est donné par ladite minimisation sous lesdites contraintes.

4. Procédé selon la revendication 1 ou 2, ladite image d'entrée projetée ($x^{proj}$) étant déterminée en résolvant une optimisation convexe correspondant à ladite minimisation.

5. Procédé selon l'une quelconque des revendications ci-dessus, ledit classificateur (60) d'images étant configuré, lorsqu'une image d'entrée (x) lui est fournie, pour délivrer une première valeur ($f_{l_0}$) de classification correspondant à ladite première classe ($\ell_0$) et une seconde valeur ($f_l$) de classification correspondant à ladite seconde classe prédéfinie ($\ell$), et ladite image d'entrée modifiée ($x^{mod}$) faisant en sorte qu'une différence (g) entre ladite première valeur ($f_{l_0}$) de classification et ladite seconde valeur ($f_l$) de classification soit plus petite que la différence (g) engendrée par ladite image d'entrée d'origine ($x^{org}$).

6. Procédé selon l'une quelconque des revendications 1 à 5, ledit classificateur (60) d'images étant configuré, lorsqu'une image d'entrée (x) lui est fournie, pour délivrer une première valeur ($f_{l_0}$) de classification correspondant à ladite première classe ($\ell_0$), et ladite image d'entrée modifiée ($x^{mod}$) faisant en sorte que ladite première valeur ($f_{l_0}$) de classification soit plus petite que ladite première valeur ($f_{l_0}$) de classification engendrée par ladite image d'entrée d'origine ($x^{org}$).

**7.** Procédé selon l'une quelconque des revendications ci-dessus, les étapes consistant à modifier ladite image d'entrée d'origine ($x^{org}$) pour donner ladite image d'entrée modifiée ($x^{mod}$) et à projeter ladite image d'entrée modifiée ($x^{mod}$) sur ledit sous-ensemble prédéfini pour donner ladite image d'entrée projetée ($x^{proj}$) étant réalisées itérativement en utilisant ladite image d'entrée projetée ($x^{proj}$) d'une itération précédente comme image d'entrée d'origine ($x^{org}$) d'une itération suivante, ladite étape de projection de ladite image d'entrée modifiée ($x^{mod}$) sur ledit sous-ensemble prédéfini étant réalisée après chaque étape de modification de ladite image d'entrée d'origine ($x^{org}$).

**8.** Procédé mis en œuvre par ordinateur pour entraîner un classificateur (60) d'images, le classificateur (60) détectant l'endroit où des objets sont situés au voisinage d'un robot au moins partiellement autonome à partir de données reçues en provenance d'un ou de plusieurs capteurs vidéo ou le classificateur (60) déterminant un état d'un produit fabriqué (12) à partir de propriétés capturées par un capteur optique qui capture des propriétés du produit fabriqué (12), comportant les étapes consistant à :

- accéder, à partir d'une mémoire (146), au classificateur (60) d'images, le classificateur (60) d'images ayant été entraîné à l'aide d'une pluralité de signaux d'entrée d'apprentissage, les images d'apprentissage étant étiquetées pour une pluralité de classes ;
- recevoir un signal (S) de capteur comportant des données provenant du ou des capteurs vidéo ou du capteur optique (30),
- déterminer une image d'entrée d'origine ($X_{org}$) qui dépend dudit signal (S) de capteur,
- déterminer une image d'entrée contradictoire ($X_{adv}$) à l'aide d'un procédé d'obtention d'une image d'entrée contradictoire ($X_{adv}$) pour le classificateur (60) d'images, le procédé d'obtention de l'image d'entrée contradictoire ($X_{adv}$) pour le classificateur d'images étant obtenu à partir d'une image d'entrée d'origine ($X_{org}$), et ladite image d'entrée contradictoire ($X_{adv}$) et ladite image d'entrée d'origine ($X_{org}$) amenant le classificateur (60) d'images à classifier ladite image d'entrée d'origine ($X_{org}$) comme appartenant à une première classe ($\ell_0$) et ladite image d'entrée contradictoire ($X_{adv}$) comme appartenant à une seconde classe ($\ell$) différente de ladite première classe ($\ell_o$), comportant les étapes consistant à :
- modifier ladite image d'entrée d'origine ($X_{org}$) pour donner une image d'entrée modifiée ($X_{mod}$) ;
- projeter ladite image d'entrée modifiée ($X_{mod}$) sur une sphère de métrique autour de ladite image d'entrée d'origine ($X_{org}$) pour donner une image d'entrée projetée ($X_{proj}$) ; et
- obtenir ladite image d'entrée contradictoire ($X_{adv}$) en fonction de ladite image d'entrée projetée ($X_{proj}$), **carac-térisé en ce que** ladite métrique est une distance de Wasserstein au moins approchée ($W_D$, $W_D^\lambda$ ) et **en ce que** ladite distance de Wasserstein au moins approchée est une distance de Sinkhorn ( $W_D^\lambda$ ) qui diffère de ladite distance de Wasserstein ($W_D$) par un terme entropique ($E_T$), et pour toute paire d'une première distribution (P) et d'une seconde distribution (Q), ledit terme entropique ($E_T$) caractérise une entropie d'une distribution $\Pi$ qui satisfait $\Pi 1_n = P$, $\Pi^T 1_n = Q$ ;
- poursuivre l'entraînement du classificateur (60) d'images pour avoir une précision améliorés en utilisant au moins l'image d'entrée contradictoire ($x^{adv}$).

**9.** Procédé mis en œuvre par ordinateur pour fournir un signal (A) de commande d'actionneur servant à commander un actionneur (10) en fonction d'un signal (y) de sortie d'un classificateur (60) d'images, comportant les étapes consistant à :

- évaluer si ledit classificateur (60) d'images est robuste ou non à l'aide du procédé selon les revendications 1 à 7, et déterminer ledit signal (A) de commande d'actionneur suivant un résultat de ladite évaluation, en particulier en déterminant ledit signal (A) de commande d'actionneur pour amener ledit actionneur (10) à fonctionner dans un mode sûr si ledit classificateur (60) d'images est jugé non robuste en raison de ladite évaluation.

**10.** Procédé selon la revendication 9, dans lequel ledit actionneur (10) commande un robot au moins partiellement autonome (100) et/ou une machine (200) de fabrication.

**11.** Programme d'ordinateur qui est configuré pour amener un ordinateur à réaliser le procédé selon l'une quelconque des revendications 1 à 10 avec toutes ses étapes si le programme d'ordinateur est exécuté par un processeur (45, 145).

**12.** Support (46, 146) de stockage lisible par machine sur lequel est stocké le programme informatique selon la revendication 11.

13. Système (140) qui est configuré pour réaliser le procédé selon les revendications 1 à 10.

**Fig. 1**

**Fig. 2**

**Fig. 3**

Fig. 4

**Fig. 5**

**Fig. 6**

**Fig. 7**

Fig. 8

```
┌─────────┐
│   901   │
└─────────┘
     │
     ▼
┌─────────┐
│   902   │
└─────────┘
     │
     ▼
┌─────────┐
│   903   │
└─────────┘
     │
     ▼
┌─────────┐
│   904   │
└─────────┘
```

**Fig. 9**

Fig. 10

**Fig. 11**

EP 3 671 574 B1

Fig. 12

```
        ┌─────────┐
        │  1300   │
        └────┬────┘
             │
             ▼
          ◇ 1310 ◇ ──────────────►  ┌─────────┐
             │                      │  1320   │
             │                      └────┬────┘
             ▼                           │
        ┌─────────┐                      ▼
        │  1330   │                 ┌─────────┐
        └────┬────┘                 │  1400   │
             │                      └─────────┘
             ▼
        ┌─────────┐
        │  1340   │
        └────┬────┘
             │
             ▼
        ┌─────────┐
        │  1350   │
        └────┬────┘
             │
             ▼
        ┌─────────┐
        │  1400   │
        └─────────┘
```

**Fig. 13**

Fig. 14

EP 3 671 574 B1

**Fig. 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10007866 BB

**Non-patent literature cited in the description**

- **JAN HENDRIK METZEN ; MUMMADI CHAITHAN-YA KUMAR ; THOMAS BROX ; VOLKER FISCHER.** Universal Adversarial Perturbations Against Semantic Image Segmentation. *arXiv:1704.05712v3*

- Adversarial examples - a complete characterisation of the phenomenon. **A. C. SERBAN ; E. POLL.** ARXIV.ORG. CORNELL UNIVERSITY LIBRARY, 201 OLIN LIBRARY CORNELL UNIVERSITY, 14853
- Sinkhorn Distances: Lightspeed Computation of Optimal Transportation Distances. *arXiv:1306.0895v1,* 2013